# EUROPÄISCHE PATENTSCHRIFT

(11) **EP 3 887 882 B1**
(45) Veröffentlichungstag und Bekanntmachung des Hinweises auf die Patenterteilung: **15.01.2025**
(21) Anmeldenummer: 19806154.1
(22) Anmeldetag: 15.11.2019
(51) Int. Cl.: G02B 6/38, B23K 26/26, B23K 26/08, B23K 26/046, G02B 6/24, G02B 6/42

(54) **VERFAHREN ZUM LASERSCHWEISSEN EINER LICHTLEITFASER IN EINEM LOCHELEMENT MITTELS EINES GEPULSTEN LASERSTRAHLS SOWIE ZUGEHÖRIGES OPTISCHES ELEMENT**
METHOD FOR LASER WELDING AN OPTICAL FIBER IN A HOLE ELEMENT USING A PULSED LASER BEAM, AND CORRESPONDING OPTICAL ELEMENT
PROCÉDÉ DE SOUDAGE LASER D'UNE FIBRE OPTIQUE DANS UN ÉLÉMENT PERFORÉ AU MOYEN D'UN FAISCEAU LASER PULSÉ ET ÉLÉMENT OPTIQUE CORRESPONDANT

(30) Priorität: 28.11.2018 DE 102018220477
(43) Veröffentlichungstag der Anmeldung: 06.10.2021
(73) Patentinhaber: TRUMPF Laser SE, 78713 Schramberg (DE)
(72) Erfinder: FUCHS, Stefan, 78661 Böhringen (DE); BAUER, Dominik, 78628 Rottweil (DE); SCHARUN, Michael, 78713 Schramberg (DE); HÖCK, Helge, 78713 Schramberg (DE); BAUMBACH, Stefan, 77709 Oberwolfach (DE); SCHINDLER, Manuel, 72186 Empfingen (DE); PROSSOTOWICZ, Maike, 46446 Emmerich (DE)
(74) Vertreter: Trumpf Patentabteilung
(86) Internationale Anmeldenummer: PCT/EP2019/081441
(87) Internationale Veröffentlichungsnummer: WO 2020/109029

(56) Entgegenhaltungen:
- EP-A1- 2 056 144
- EP-A2- 0 905 534
- JP-A- 2017 068 052
- US-A1- 2013 344 302

## Beschreibung

Die Erfindung betrifft ein Verfahren zum Schweißen einer Lichtleitfaser, insbesondere einer Hohlkernfaser, und eines Lochelements, insbesondere aus Glas, mittels eines gepulsten Laserstrahls, insbesondere UKP-Laserstrahls, wobei die Lichtleitfaser in ein Loch des Lochelements eingeschoben ist, so dass der Außenumfang der Lichtleitfaser und der Innenumfang des Loches eine zylindrische Fügefläche bilden, wobei die Lichtleitfaser und das Lochelement im Bereich der Fügefläche mittels des in das Werkstückmaterial fokussierten Laserstrahls lokal aufgeschmolzen und dadurch miteinander verschweißt werden. Vorzugsweise weist der Laserstrahl eine Wellenlänge auf, bei der mindestens ein Fügepartner transparent/teiltransparent ist. Die Erfindung betrifft weiter ein optisches Element aus einer Lichtleitfaser und einem Lochelement, die miteinander verschweißt sind.

Lichtleitfasern sind beispielsweise Step-Index oder Mehrclad-Fasern, PCF (Polymer Cladded Fibre) oder Hohlkernfasern. Hohlkernfasern sind passive Transportfasern, die Strahlung durch einen hohlen Kern, umgeben mit einer feinen photonischen Glasstruktur, z.B. in Kagomé Konfiguration, führen. Durch den hohlen Kern können Glaszerstörschwellen umgangen und nichtlineare Effekte unterdrückt werden, sodass höhere Intensitäten geführt werden können. Der hohle Kern kann hierfür ein Vakuum aufweisen. Andererseits kann das hohle Innere des Kerns auch gezielt mit einem Gas, wie z.B. Argon gefüllt werden.

Lochelemente sind beispielsweise Lochsteine, Ferrulen/Glashülsen oder auch Lochscheiben oder Lochkappen.

Schweißungen von monolithischen Verbindungen mit der Hohlkernfaser können beispielsweise mittels CO2-Spleißen erreicht werden. Dafür wird allerdings z.B. die empfindliche Kagomé-Struktur mit aufgeschmolzen, welches im Wesentlichen die Strahlqualität negativ beeinflusst. Weitere Möglichkeiten der Verbindung sind beispielsweise das Kleben oder das Verspannen mit einem O-Ring, was beides Verspannungsprobleme bereiten kann. Kleber können dazu ausgasen oder vorzeitig altern.

Außerdem ist bei Hohlkernfasern die im Wesentlichen mittige Positionierung des Kerns über das Loch des Lochelements, z. B. einer Lochkappe, sowie eine plane Ausrichtung der Faser auf das Lochelement erforderlich. Dies erfordert für die Halterung eine hohe Präzision und gleichzeitig genügend Justage-Freiheitsgrade. Für den kompletten Prozess sind demnach nur sehr geringe Toleranzen vorhanden, damit eine erfolgreiche Schweißung erfolgt, bei der die Strahlqualität erhalten bleibt und eine ausreichende Festigkeit und/oder Gasdichtigkeit erzielt wird.

In der EP 0 905 534 A2 (offenbarend den Oberbegriff der Ansprüche 1 und 12) ist die Verbindung einer Faser mit einer Glashülse beschrieben. Hierfür wird am Faserende an der Grenzfläche zwischen Faser und Glashülse Material von Faser und Glashülse ringförmig aufgeschmolzen und die beiden Werkstücke werden so verbunden.

Aus der JP 2017 068052 A sind ein Glaselement mit einer optischen Faser und ein Verfahren zu dessen Herstellung bekannt.

Die vorliegende Erfindung stellt sich demgegenüber die Aufgabe, ein faserschonendes Schweißverfahren mit verbesserter Verbindung von Lichtleitfaser und Lochelement zur Verfügung zu stellen.

Diese Aufgabe wird erfindungsgemäß dadurch gelöst, dass auf den Bereich der Fügefläche ein gepulster Laserstrahl fokussiert wird, dessen Strahlrichtung in axialer Richtung der zylindrischen Fügefläche verläuft, und dass der Laserfokus im Bereich der Fügefläche in oder entgegen der Strahlrichtung des Laserstrahls in axialer Richtung bewegt wird, um im Bereich der Fügefläche mindestens eine Schweißnaht, insbesondere eine axiale bzw. achsparallele Schweißnaht, zu erzeugen. Vorzugsweise weist der UKP-Laserstrahl Laserstrahlung mit Pulsdauern kleiner als 50 ps, bevorzugt kleiner 1ps, insbesondere im Femtosekundenbereich, auf.

Dieses Schweißverfahren lässt sich besonders vorteilhaft auf das Schweißen von Hohlkernfasern anwenden. Hohlkernfasern sind Lichtleitfasern, bestehend aus einem hohlen Faserkern und einem Fasermantel.

Es hat sich gezeigt, dass bedingt durch die geringen Abmessungen der Hohlkernfaser sowie durch die empfindliche Struktur im Inneren der Hohlkernfaser sich besondere Anforderungen an die Schweißung ergeben. Obwohl nur sehr lokal Wärme eingebracht werden darf, wird durch das erfindungsgemäße Verfahren eine ausreichende Festigkeit erzielt, sodass eine Handhabung der Faser zur weiteren Konfektionierung möglich ist. Zudem ist es möglich, die Schweißnaht präzise zu positionieren sowie auch die Breite der Schweißnaht schmal zu halten. Dies ist ausschlaggebend für die spätere Strahlqualitätserhaltung der Hohlkernfaser. Die Schweißnaht darf die empfindliche innere Struktur der Hohlkernfaser nicht zerstören und muss deshalb schmaler sein als der Fasermantel. Vorzugsweise wird mit einem Laserfokusdurchmesser von ca. 5-10 µm gearbeitet; die resultierende Schweißnaht ist dann ca. 50-70 µm im Durchmesser.

Ein weiterer Vorteil des erfindungsgemäßen Schweißverfahrens ist die gute zu erzielende Gasdichtigkeit der Verbindung. Dies ist besonders wichtig für Hohlkernfasern, da diese für hohe Spitzenintensitäten evakuiert werden müssen oder gezielt mit Gasen, z. B. Argon, befüllt werden, um eine spektrale Verbreiterung zur Pulsverkürzung zu erreichen.

Gepulste Laserstrahlen, insbesondere ultrakurz gepulste (UKP)-Laserstrahlung mit Pulsdauern kleiner als 500 ps, insbesondere im Femtosekundenbereich, werden zunehmend für die Materialbearbeitung eingesetzt. Die Besonderheit der Materialbearbeitung mit UKP-Laserstrahlung liegt in den hohen Spitzenleistungen/ Spitzenintensitäten der Laserstrahlung mit dem Werkstück. Dadurch bedingt lassen sich im Festkörper extreme thermische Ungleichgewichte erzeugen, z.B. zwischen Elektronen und Atom/Ion-Rümpfen, die dann zu einzigartigen Abtrags- oder Formationsmechanismen führen.

Hintergrund ist das lokale Aufschmelzen des Materials mittels ultrakurzer Laserpulse. Fokussiert man ultrakurze Laserpulse in das Volumen von Glas, z.B. Quarzglas, führt die im Laserfokus vorliegende hohe Intensität zu nichtlinearen Absorptionsprozessen, wodurch, in Abhängigkeit der Laserparameter, verschiedene Materialmodifikationen induziert werden können. Durch diese nichtlinearen Absorptionsprozesse werden freie Ladungsträger erzeugt, die in Folge quasi linear absorbieren. So entsteht lokal ein Plasma, welches die Schmelzzone ausbildet. Platziert man die Modifikation im Bereich der Grenzfläche zweier Gläser, generiert die abkühlende Schmelze eine stabile Verbindung beider Gläser. Aufgrund des sehr lokalen Fügeprozesses sind die laserinduzierten Spannungen typischerweise gering, wodurch auch in ihren thermischen Eigenschaften stark verschiedene Gläser verschweißt werden können. Auch können andere transparente Materialien wie Kristalle mit teilweise noch stärker abweichenden thermischen und mechanischen Eigenschaften miteinander bzw. mit Gläsern verschweißt werden.

Erfindungsgemäß wird im Bereich der zylindrischen Fügefläche zwischen Lichtleitfaser und Lochelement mindestens eine Schweißnaht durch eine Vorschubbewegung des Laserfokus in oder entgegen der Strahlrichtung des Laserstrahls erzeugt. Diese Vorschubbewegung des Laserfokus kann beispielsweise durch eine Bewegung des Laserbearbeitungskopfs in oder entgegen der Strahlrichtung des Laserstrahls und/oder durch eine Vorschubbewegung von Lichtleitfaser und Lochelement in oder entgegen der Strahlrichtung des Laserstrahls erfolgen, aber auch eine Brennweitenänderung der Fokussieroptik ist möglich.

Die mindestens eine Schweißnaht weist dabei Richtungsanteile in axialer Richtung der Lichtleitfaser bzw. der zylindrischen Fügefläche auf und befindet sich im Bereich der Fügefläche von Lichtleitfaser und Lochelement. Die mindestens eine Schweißnaht kann auch Richtungsanteile in Umfangsrichtung der Lichtleitfaser aufweisen. Hierfür kann der Vorschubbewegung des Laserfokus in oder entgegen der Strahlrichtung eine Bewegung in Umfangsrichtung der zylindrischen Fügefläche überlagert werden.

Für eine zuverlässige Fügeverbindung können mehrere in Umfangsrichtung der Fügefläche voneinander beabstandete Schweißnähte erzeugt werden. Vorzugsweise wird im Bereich mit dem geringsten Fügespalt begonnen und dann alternierend davon weiter gegangen. So schließt eine Schweißnaht an eine bereits stabil gefügte Schweißnaht an. Experimente zeigen, dass dadurch auch Fügespalte überbrückt werden können, die größer sind als die, die mit einer Einzelnaht überbrückt werden können.

Vorzugsweise erfolgt die in oder entgegen der Strahlrichtung verlaufende Vorschubbewegung des Laserfokus kontinuierlich, kann aber auch schrittweise mit oder ohne Pausen zwischen den einzelnen Schritten erfolgen. Im letzteren Fall führt das Schweißen ohne Pausen dazu, dass in dem noch vom vorhergehenden Schritt heißen Material geschweißt wird, und das Schweißen mit Pausen dazu, dass wegen der zeitlichen Verzögerung zum vorhergehenden Schritt in bereits abgekühltem Material geschweißt wird. Wie Versuche gezeigt haben, führt insbesondere das kontinuierliche Laserschweißen entgegen der Strahlrichtung zu einer rissfreien durchgängigen Schweißnaht.

Vorzugsweise wird bei einem Vorschub entgegen der Strahleinfallsrichtung mit einem kontinuierlichen Vorschub im Bereich von 0,5mm/s bis 100mm/s, bevorzugt 5mm/s bis 30mm/s, besonders bevorzugt mit ca. 20mm/s, gearbeitet.

Vorzugsweise wird bei der Schweißung eine Schweißnaht mit einem Nahtdurchmesser von 5-500µm, bevorzugt 50-100 µm, erzeugt.

Um den Toleranzbereich und die Schweißnahtgesamtbreite zu vergrößern, werden an einer Umfangsposition statt einer einzigen axialen Schweißnaht bevorzugt mehrere einander in Richtung quer zur Fügefläche überlappende axiale Schweißnähte sequentiell erzeugt.

Es ist möglich, bei der Schweißung mit Einzelpulsen zu arbeiten. Vorzugsweise wird bei der Schweißung mit Pulspaketen gearbeitet, die mehrere Einzelpulse aufweisen. Ein Pulszug besteht aus vielen Einzelpulsen, wobei im Pulszug die Einzelpulse eine Einzelpulsrepetitionsrate von Puls zu Puls aufweisen. Pulspakete bestehen aus mindestens zwei Einzelpulsen. Hier gibt es auch eine Einzelpulsrepetitionsrate. Desweiteren gibt es auch eine Pulspaket-zu-Pulspaket-Repetitionsrate. Bevorzugt sind die Einzelpulse in einem Pulspaket gleich. Die Anzahl Einzelpulse in einem Pulspaket beträgt beispielsweise zwischen 2 und 20, bevorzugt ca. 5. Beispielsweise können die Pulspaket-zu-Pulspaket-Repetitionsraten 50-200kHz, bevorzugt ca. 125 kHz, und die mittlere Pulsleistung 1-20W, bevorzugt ca. 10 W, betragen. Die Einzelpulsrepetitionsrate im Pulspaket beträgt typischerweise mehrere MHz.

Das erfindungsgemäße Verfahren kann beispielsweise beim Schweißen von Lochkappe, Schutzkappe oder Endkappe auf Lichtleitfasern oder beim Justierfügen, z.B. die Spiegel eines Multipassverstärkers, Anwendung finden.

Die Erfindung betrifft in einem weiteren Aspekt auch ein mit dem erfindungsgemäßen Laserschweißen aus Lichtleitfaser und Lochelement zusammengefügtes optisches Element, wobei die Lichtleitfaser in einem Loch des Lochelements angeordnet ist und der Außenumfang der Lichtleitfaser und der Innenumfang des Loches des Lochelements eine zylindrische Fügefläche bilden und wobei die Lichtleitfaser und das Lochelement im Bereich der zylindrischen Fügefläche mittels mindestens einer Schweißnaht verbunden sind, die sich in axialer Richtung der zylindrischen Fügefläche erstreckt.

Vorzugsweise ist die Lichtleitfaser aus einer Glasstruktur, z.B. Kagomé-Struktur, gebildet, die ein hohles Inneres umgibt. Der hohle Faserkern aus einer Glasstruktur ist von einem Fasermantel umgeben. Das Lochelement ist bevorzugt aus Glas, z.B. ein Lochstein, Ferrule/Glashülse oder auch eine Lochscheibe oder Lochkappe.

Das durch das erfindungsgemäße Verfahren hergestellte optische Element weist eine Schweißnaht im Bereich des Außenumfangs des Mantels der Lichtleitfaser auf. Die Schweißnaht erstreckt sich beispielsweise in axialer bzw. achsparalleler Richtung zur Lichtleitfaser bzw. zur zylindrischen Fügefläche. Die Schweißnaht kann auch Richtungskomponenten in Umfangsrichtung des Außenumfangs des Fasermantels aufweisen.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigen:
- Fig. 1: schematisch eine Laserbearbeitungsmaschine zum erfindungsgemäßen Laserschweißen einer Lichtleitfaser in einem Lochelement;
- Fig. 2: schematisch einen Längsschnitt durch die mit dem Lochelement verschweißte Lichtleitfaser mit einer axialen Schweißnaht im Bereich einer zylindrischen Fügefläche;
- Fign. 3, 4: schematisch eine Draufsicht auf die Stirnseite der Lichtleitfaser und des Lochelements mit mehreren in Umfangsrichtung der zylindrischen Fügefläche voneinander beabstandeten, axialen Schweißnähten (Fig. 3) und mit zusätzlichen sequentiell erzeugten axialen Schweißnähten (Fig. 4).

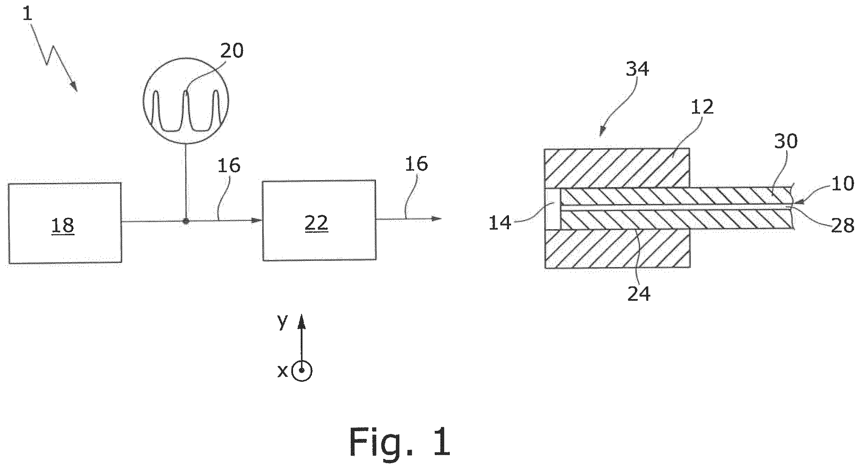

Die in **Fig. 1** gezeigte Laserbearbeitungsmaschine **1** dient zum Schweißen des Außenumfangs einer Lichtleitfaser **10** mit dem Innenumfang des Lochs **14** eines Lochelements **12** mittels eines Laserstrahls **16**. Vorzugsweise weist der Laserstrahl 16 eine Wellenlänge auf, bei der mindestens ein Fügepartner transparent/teiltransparent ist. Die Lichtleitfaser 10 ist beispielsweise aus Glas, insbesondere Quarzglas, und das Lochelement 12 beispielsweise aus Glas, insbesondere Quarzglas, aus Polymer, Glaskeramik, kristallin oder aus Kombinationen davon und/oder mit opaken Materialien gebildet.

Die Laserbearbeitungsmaschine 1 umfasst einen UKP-Laser **18** zum Erzeugen des Laserstrahls 16 in Form von UKP-Laserpulsen **20** mit Pulsdauern kleiner als 50 ps, bevorzugt kleiner 1ps, insbesondere in Form von Femtosekundenpulsen, sowie einen in X-Y-Richtung bewegbaren Laserbearbeitungskopf **22,** aus dem der Laserstrahl 16 austritt. Alternativ oder zusätzlich kann auch die zu schweißende Baugruppe aus Lichtleitfaser 10 und Lochelement 12 bewegt werden.

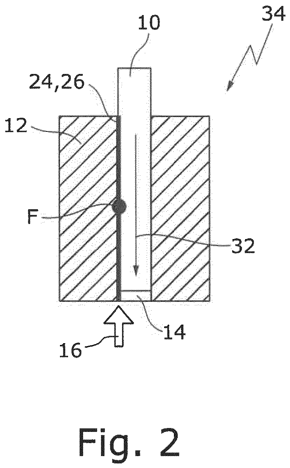

Nachdem die Lichtleitfaser 10 in das Loch 14 des Lochelements 12 eingeschoben und positioniert worden ist, wird der Laserstrahl 16 in den Bereich der zylinderförmigen gemeinsamen Fügefläche **24** von Lichtleitfaser 10 und Lochelement 12 fokussiert, um die Lichtleitfaser 10 und das Lochelement 12 im Bereich der Fügefläche 24 lokal aufzuschmelzen und so miteinander zu verschweißen. Dabei wird der Laserfokus des achsparallel zur Lichtleitfaser 10 bzw. zur zylindrischen Fügefläche 24 ausgerichteten Laserstrahls 16 in oder entgegen der Strahlrichtung des Laserstrahls 16, also in axialer Richtung der zylindrischen Fügefläche 24, bewegt, um im Bereich der Fügefläche 24 eine sich in Strahlrichtung erstreckende axiale Schweißnaht **26** (Fig. 2b) zu erzeugen. Der Laserfokus **F** des fokussierten Laserstrahls 16 befindet sich an der Fügefläche 24 oder nahe an dieser Fügefläche 24 im Volumen eines der beiden Komponenten 10, 12. Vorzugsweise erstreckt sich die vertikale Schweißnaht 26 fast über die gesamte Dicke des Lochelements 12 und endet so vor den Oberseite und Unterseiten des Lochelements 12, dass kein Materialaustritt entsteht und ein sauberer Prozess gefahren wird. Dies hängt von der Größe der Schweißnaht 26 bzw. Schweißblase ab.

Im dargestellten Ausführungsbeispiel ist die Lichtleitfaser 10 lediglich beispielhaft als eine Hohlkernfaser mit einem Kern **28** und einem Mantel **30** ausgebildet.

**Fig. 2** zeigt schematisch einen Längsschnitt durch die mit dem Lochelement 12 verschweißte Lichtleitfaser 10 mit einer im Bereich der Fügefläche 24 ausgebildeten axialen Schweißnaht 26. Der Laserstrahl 16 trifft in axialer Richtung der Lichtleitfaser 10 auf die Fügefläche 24 zwischen dem Außenumfang der Lichtleitfaser 10 und dem Innenumfang des Lochs 14 des Lochelements 12. Der Laserfokus **F** wird in oder, wie in Fig. 2 gezeigt, entgegen der Strahlrichtung (Z-Richtung) des Laserstrahls 16 bewegt, so dass sich eine axiale Vorschubrichtung **32** des Laserfokus F bzw. eine Schweißrichtung entgegen der Strahlrichtung des Laserstrahls 16 ergibt. Das so gebildete optische Element ist insgesamt mit **34** bezeichnet.

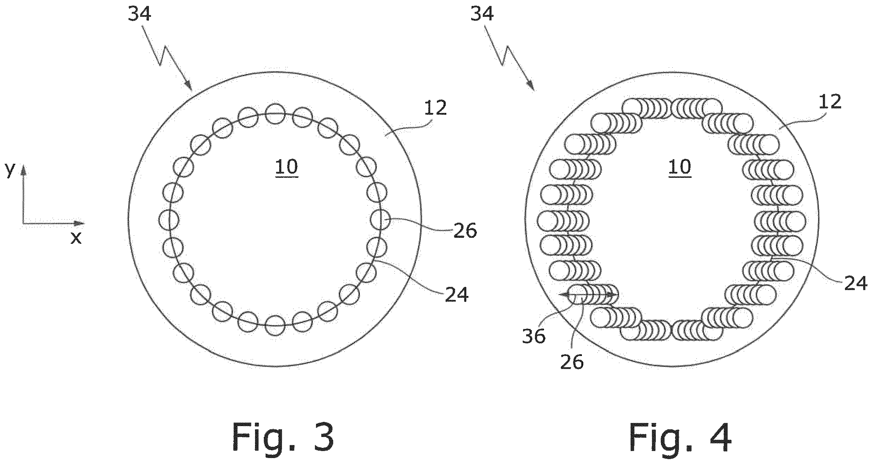

Bei dem in **Fig. 3** gezeigten optischen Element 34 sind im Bereich der zylindrischen Fügefläche 24, wie oben beschreiben, mehrere in Umfangsrichtung der zylindrischen Fügefläche 24 voneinander beabstandete, axiale Schweißnähte 26 erzeugt worden, wodurch die Lichtleitfaser 10 in dem Lochelement 12 verschweißt ist.

Wie in **Fig. 4** gezeigt, können an einer Umfangsposition statt einer einzigen axialen Schweißnaht jeweils mehrere axiale Schweißnähte 26 nebeneinander sequentiell erzeugt werden, die einander in Richtung **36** quer zur Fügefläche 24 überlappen, um die Schweißnahtgesamtbreite und dadurch den Toleranzbereich zu vergrößern.

## Patentansprüche

1. Verfahren zum Schweißen einer Lichtleitfaser (10), insbesondere einer Hohlkernfaser, und eines Lochelements (12), insbesondere aus Glas, mittels eines gepulsten Laserstrahls (16), insbesondere UKP-Laserstrahls, wobei die Lichtleitfaser (10) in ein Loch (14) des Lochelements (12) eingeschoben ist, so dass der Außenumfang der Lichtleitfaser (10) und der Innenumfang des Loches (14) eine zylindrische Fügefläche (24) bilden, wobei die Lichtleitfaser (10) und das Lochelement (12) im Bereich der Fügefläche (24) mittels des in das Werkstückmaterial fokussierten Laserstrahls (16) lokal aufgeschmolzen und dadurch miteinander verschweißt werden,
**dadurch gekennzeichnet,**
**dass** auf den Bereich der Fügefläche (24) ein gepulster Laserstrahl (16) fokussiert wird, dessen Strahlrichtung in axialer Richtung der zylindrischen Fügefläche (24) verläuft, und dass der Laserfokus (F) im Bereich der Fügefläche (24) in oder entgegen der Strahlrichtung des Laserstrahls (16) in axialer Richtung bewegt wird, um im Bereich der Fügefläche (24) mindestens eine Schweißnaht (26), insbesondere eine axiale Schweißnaht, zu erzeugen.

2. Verfahren nach Anspruch 1, **dadurch gekennzeichnet, dass** im Bereich der Fügefläche (24) mehrere in Umfangsrichtung der zylindrischen Fügefläche (24) voneinander beabstandete Schweißnähte (26) erzeugt werden.

3. Verfahren nach einem der vorhergehenden Ansprüche, **dadurch gekennzeichnet, dass** die Vorschubbewegung (32) des Laserfokus (26) in oder entgegen der Strahlrichtung kontinuierlich oder schrittweise erfolgt.

4. Verfahren nach Anspruch 3, **dadurch gekennzeichnet, dass** die Vorschubbewegung (32) kontinuierlich mit einer Vorschubgeschwindigkeit von 0,5 mm/s bis 100 mm/s, bevorzugt von 5 mm/s bis 30 mm/s, besonders bevorzugt mit ca. 20mm/s, erfolgt.

5. Verfahren nach einem der vorhergehenden Ansprüche, **dadurch gekennzeichnet, dass** eine Schweißnaht (26) mit einem Nahtdurchmesser von 5-500 µm, bevorzugt 50-100 µm, erzeugt wird.

6. Verfahren nach einem der vorhergehenden Ansprüche, **dadurch gekennzeichnet, dass** mehrere einander in Richtung (36) quer zur Fügefläche (24) überlappende axiale Schweißnähte sequentiell erzeugt werden.

7. Verfahren nach einem der vorhergehenden Ansprüche, **dadurch gekennzeichnet, dass** der gepulste Laserstrahl (26) Laserpulspakete umfasst, welche aus Einzelpulsen bestehen.

8. Verfahren nach Anspruch7, **dadurch gekennzeichnet, dass** die Einzelpulse in einem Pulspaket gleich sind.

9. Verfahren nach Anspruch 7 oder 8, **dadurch gekennzeichnet, dass** die Zahl der Einzelpulse in einem Pulspaket zwischen 1 und 20 beträgt.

10. Verfahren nach einem der vorhergehenden Ansprüche, **dadurch gekennzeichnet, dass** die Laserpulse (20) des Laserstrahls (16) eine Einzelpulsrepetitionsrate im Pulspaket von 50-200 kHz und/oder eine mittlere Pulsleistung von 1-20 W und/oder einen Laserfokus (F) an der Schweißstelle von 5-10 µm aufweisen.

11. Verfahren nach einem der vorhergehenden Ansprüche, **dadurch gekennzeichnet, dass** der UKP-Laserstrahl Laserstrahlung mit Pulsdauern kleiner als 50 ps, bevorzugt kleiner 1ps, insbesondere im Femtosekundenbereich, aufweist.

12. Optisches Element (34) aus einer Lichtleitfaser (10), insbesondere einer Hohlkernfaser, und einem Lochelement (12), insbesondere aus Glas, wobei die Lichtleitfaser (10) in einem Loch (14) des Lochelements (12) angeordnet ist und der Außenumfang der Lichtleitfaser (10) und der Innenumfang des Loches (14) des Lochelements (12) eine zylindrische Fügefläche (24) bilden,
**dadurch gekennzeichnet, dass**:
die Lichtleitfaser (10) und das Lochelement (12) im Bereich der zylindrischen Fügefläche (24) mittels mindestens einer Schweißnaht (26) verbunden sind, die sich in axialer Richtung der zylindrischen Fügefläche (24) erstreckt, und wobei die mindestens eine Schweißnaht (26) durch das Verfahren gemäß einem der Ansprüche 1 bis 11 hergestellt ist.

13. Optisches Element nach Anspruch 12, **dadurch gekennzeichnet, dass** sich die mindestens eine Schweißnaht (26) zusätzlich auch in Umfangsrichtung der zylindrischen Fügefläche (24) erstreckt.

14. Optisches Element nach Anspruch 12 oder 13, **gekennzeichnet durch** mehrere in Umfangsrichtung der zylindrischen Fügefläche (24) voneinander beabstandete Schweißnähte (26) im Bereich der zylindrischen Fügefläche (24).

## Claims

1. A method for welding an optical fiber (10), in particular a hollow-core fiber, and a perforated element (12), in particular made of glass, by means of a pulsed laser beam (16), in particular a USP laser beam, wherein the optical fiber (10) is inserted into a hole (14) of the perforated element (12) so that the outer circumference of the optical fiber (10) and the inner circumference of the hole (14) form a cylindrical joining surface (24), wherein the optical fiber (10) and the perforated element (12) are locally melted in the region of the joining surface (24) by means of the laser beam (16) focused into the workpiece material and thereby welded to one another,
**characterized in that**
a pulsed laser beam (16) whose beam direction extends in the axial direction of the cylindrical joining surface (24) is focused on the region of the joining surface (24), and **in that** the laser focus (F) in the region of the joining surface (24) is moved in the axial direction in or opposite to the beam direction of the laser beam (16) in order to produce at least one weld seam (26), in particular an axial weld seam, in the region of the joining surface (24).

2. The method according to claim 1, **characterized in that** a plurality of weld seams (26) spaced apart from one another in the circumferential direction of the cylindrical joining surface (24) are produced in the region of the joining surface (24).

3. The method according to one of the preceding claims, **characterized in that** the feed movement (32) of the laser focus (26) in or opposite to the beam direction is continuous or stepwise.

4. The method according to claim 3, **characterized in that** the feed movement (32) takes place continuously at a feed rate of between 0.5 mm/s and 100 mm/s, preferably between 5 mm/s and 30 mm/s, in particular preferably at approximately 20 mm/s.

5. The method according to one of the preceding claims, **characterized in that** a weld seam (26) is produced with a seam diameter of 5-500 µm, preferably 50-100 µm.

6. The method according to one of the preceding claims, **characterized in that** a plurality of axial weld seams overlapping one another in the direction (36) transverse to the joining surface (24) are produced sequentially.

7. The method according to one of the preceding claims, **characterized in that** the pulsed laser beam (26) comprises laser pulse packets which consist of individual pulses.

8. The method according to claim 7, **characterized in that** the individual pulses in a pulse packet are the same.

9. The method according to claim 7 or 8, **characterized in that** the number of individual pulses in a pulse packet is between 1 and 20.

10. The method according to one of the preceding claims, **characterized in that** the laser pulses (20) of the laser beam (16) have an individual pulse repetition rate in the pulse packet of 50-200 kHz and/or an average pulse power of 1-20 W and/or a laser focus (F) at the welding point of 5-10 µm.

11. The method according to one of the preceding claims, **characterized in that** the USP laser beam emits laser radiation with pulse durations of less than 50 ps, preferably less than 1 ps, in particular in the femtosecond range.

12. An optical element (34) made of an optical fiber (10), in particular a hollow-core fiber, and a perforated element (12), in particular made of glass, wherein the optical fiber (10) is arranged in a hole (14) of the perforated element (12) and the outer circumference of the optical fiber (10) and the inner circumference of the hole (14) of the perforated element (12) form a cylindrical joining surface (24),
**characterized in that**:
the optical fiber (10) and the perforated element (12) are connected in the region of the cylindrical joining surface (24) by means of at least one weld seam (26) which extends in the axial direction of the cylindrical joining surface (24), and wherein the at least one weld seam (26) is produced by the method according to one of claims 1 to 11.

13. The optical element according to claim 12, **characterized in that** the at least one weld seam (26) also extends in the circumferential direction of the cylindrical joining surface (24).

14. The optical element according to claim 12 or 13, **characterized by** a plurality of weld seams (26) spaced apart from one another in the circumferential direction of the cylindrical joining surface (24) in the region of the cylindrical joining surface (24).

## Revendications

1. Procédé de soudage d'une fibre optique (10), en particulier d'une fibre à cœur creux, et d'un élément perforé (12), en particulier en verre, au moyen d'un faisceau laser (16) pulsé, en particulier d'un faisceau laser à impulsions ultra-brèves, dans lequel la fibre optique (10) est insérée dans un trou (14) de l'élément perforé (12), de sorte que la périphérie extérieure de la fibre optique (10) et la périphérie intérieure du trou (14) forment une surface de jonction (24) cylindrique, dans laquelle la fibre optique (10) et l'élément perforé (12) sont fondus localement dans la zone de la surface de jonction (24) au moyen du faisceau laser (16) focalisé dans le matériau de la pièce, puis soudés ainsi ensemble,
**caractérisé en ce**
**qu'**un faisceau laser (16) pulsé est focalisé sur la zone de la surface de jonction (24), avec une direction de faisceau dans la direction axiale de la surface de jonction (24) cylindrique, et **en ce que** le foyer laser (F) est déplacé dans la zone de la surface de jonction (24) dans le sens ou à l'encontre de la direction de faisceau du faisceau laser (16) dans la direction axiale pour produire au moins un cordon de soudure (26), en particulier un cordon de soudure axial, dans la zone de la surface de jonction (24).

2. Procédé selon la revendication 1, **caractérisé en ce que** plusieurs cordons de soudure (26) espacés les uns des autres dans la direction circonférentielle de la surface de jonction (24) cylindrique sont produits dans la zone de la surface de jonction (24).

3. Procédé selon l'une des revendications précédentes, **caractérisé en ce que** le mouvement d'avance (32) du foyer laser (26) dans le sens ou à l'encontre de la direction de faisceau est produit de manière continue ou par étapes.

4. Procédé selon la revendication 3, **caractérisé en ce que** le mouvement d'avance (32) est produit de manière continue à une vitesse d'avance de 0,5 mm/s à 100 mm/s, de manière préférentielle de 5 mm/s à 30 mm/s, de manière encore préférentielle d'environ 20 mm/s.

5. Procédé selon l'une des revendications précédentes, **caractérisé en ce qu'**un cordon de soudure (26) avec un diamètre de cordon de 5-500 µm, de manière préférentielle 50-100 µm, est produit.

6. Procédé selon l'une des revendications précédentes, **caractérisé en ce que** plusieurs cordons de soudure axiaux se chevauchant dans la direction (36) transversale à la surface de jonction (24) sont produits de manière séquentielle.

7. Procédé selon l'une des revendications précédentes, **caractérisé en ce que** le faisceau laser (26) pulsé comprend des trains d'impulsion laser, lesquels sont constitués d'impulsions individuelles.

8. Procédé selon la revendication 7, **caractérisé en ce que** les impulsions individuelles dans un train d'impulsion sont identiques.

9. Procédé selon les revendications 7 ou 8, **caractérisé en ce que** le nombre d'impulsions individuelles dans un train d'impulsion est compris entre 1 et 20.

10. Procédé selon l'une des revendications précédentes, **caractérisé en ce que** les impulsions laser (20) du faisceau laser (16) présentent un taux de répétition d'impulsion individuelle dans le train d'impulsion de 50-200 kHz et/ou une puissance d'impulsion moyenne de 1-20 W et/ou un foyer laser (F) au point de soudure de 5-10 µm.

11. Procédé selon l'une des revendications précédentes, **caractérisé en ce que** le faisceau laser à impulsions ultra-brèves présente une durée d'impulsion inférieure à 50 ps, de manière préférentielle inférieure à 1 ps, en particulier dans le domaine des femtosecondes.

12. Élément optique (34) constitué d'une fibre optique (10), en particulier d'une fibre à cœur creux, et d'un élément perforé (12), en particulier en verre, dans lequel la fibre optique (10) est disposée dans un trou (14) de l'élément perforé (12), la périphérie extérieure de la fibre optique (10) et la périphérie intérieure du trou (14) de l'élément perforé (12) formant une surface de jonction (24) cylindrique,
**caractérisé en ce que** :
la fibre optique (10) et l'élément perforé (12) sont reliés dans la zone de la surface de jonction (24) cylindrique au moyen d'au moins un cordon de soudure (26), s'étendant dans la direction axiale de la surface de jonction (24) cylindrique, et dans lequel au moins un cordon de soudure (26) est établi par le procédé selon l'une des revendications 1 à 11.

13. Élément optique selon la revendication 12, **caractérisé en ce qu'**au moins un cordon de soudure (26) s'étend en outre également dans la direction circonférentielle de la surface de jonction (24) cylindrique.

14. Élément optique selon les revendications 12 ou 13, **caractérisé par** plusieurs cordons de soudure (26) espacés les uns des autres dans la direction circonférentielle de la surface de jonction (24) cylindrique dans la zone de la surface de jonction (24) cylindrique.
